# EUROPÄISCHE PATENTSCHRIFT

(11) **EP 0 303 637 B1**
(45) Veröffentlichungstag und Bekanntmachung des Hinweises auf die Patenterteilung: **04.08.1993**
(21) Anmeldenummer: 88901404.9
(22) Anmeldetag: 19.02.1988
(51) Int. Cl.: B01L 9/04, B01D 3/08, B66F 7/02

(54) **HEBEEINRICHTUNG FÜR LABORGERÄTE MIT STATIVPROFIL UND GRUNDKONSOLE SOWIE LABORHEIZBAD, INSBESONDERE FÜR ROTATIONSVERDAMPFER**
LIFTING DEVICE FOR LABORATORY APPARATUS WITH STAND PROFILE AND BASE CONSOLE, AND LABORATORY HEATING BATH, IN PARTICULAR FOR ROTARY EVAPORATORS
DISPOSITIF DE LEVAGE POUR APPAREILS DE LABORATOIRE AYANT UN STATIF ET UN PLATEAU DE BASE, ET CHAUFFE-BAIN DE LABORATOIRE, NOTAMMENT POUR VAPORISATEURS ROTATIFS

(30) Priorität: 23.02.1987 CH 676/87; 12.11.1987 CH 4412/87
(43) Veröffentlichungstag der Anmeldung: 22.02.1989
(73) Patentinhaber: RESONA INNOVATION AG, CH-9202 Gossau (CH)
(72) Erfinder: RESONA INNOVATION AG, CH-9202 Gossau (CH)
(74) Vertreter: Troesch, Hans Alfred
(86) Internationale Anmeldenummer: CH8800041
(87) Internationale Veröffentlichungsnummer: WO8806063

(56) Entgegenhaltungen:
- EP-A- 0 149 972
- EP-A- 0 156 937
- WO-A-86/03684
- CH-A- 351 945
- CH-A- 657 715
- DE-A- 2 649 950
- DE-A- 2 758 433
- DE-A- 3 330 765
- FR-A- 2 387 899
- US-A- 2 774 567

## Beschreibung

Die vorliegende Erfindung betrifft eine Hebeeinrichtung für Laborgeräte mit Stativprofil und Grundkonsole, mit einem anzuhebenden und abzusenkenden, längs eines Stativs bewegbaren Tragelement, welches mit Mitteln zum Festhalten und mit Betätigungsmitteln zum Verschieben des Tragelementes versehen ist sowie ein Laborheizbad, insbesondere für Rotationsverdampfer.

Schnellhebevorrichtungen dienen bei Rotationsverdampfern zur Aufnahme von Glasarmaturen zum Verdampfen und Kondensieren von Substanzen, zum Heben von Heizbädern, Mixern, Laborrührern u. dgl.

In den meisten Fällen ist es erforderlich, dass das Heben und Senken schnell, mühelos, sicher, d.h. ohne Abkippen oder Hochheben der Hebevorrichtung selbst und vor allem einhändig erfolgen kann. Bezüglich Handhabung, Ergonomie und Sicherheit werden hohe Anforderungen an solche Hebeeinrichtungen gestellt, vor allem wenn sie universell eingesetzt werden sollen. Heute werden viele Vorgänge bzw. Arbeiten im Labor durch eine Mikroelektronik gesteuert und überwacht. Auch die Hebeeinrichtung muss in diesen Prozess geschaltet werden können. Aus diesen Gründen muss eine universelle und moderne Hebeeinrichtung den Ansprüchen und Vorschriften der Sicherheit von einfachen bis prozessgesteuerten Anwendungen vollends genügen.

Eine solche universelle Hebeeinrichtung, die für Rotatationsverdampfer und als allgemeine Laborhebeeinrichtung den Ansprüchen genügt und gleichzeitig für den Handantrieb und als motorischer Antrieb ausgelegt ist, ist bis heute nicht bekannt.

Es ist aber ein höhenverstellbares Stativ, insbesondere für Rotationsverdampfer mit einer Grundplatte und mit einer entlang einer etwa vertikalen Stativstange verschiebbaren und mittels einer Arretierung an dieser feststellbaren Haltevorrichtung bekannt geworden. Diese Vorrichtung, bezüglich ihrer Funktion im Tragelement, dient zum Befestigen eines Glassatzes und eines Antriebsaggregates o.dgl. Die Haltevorrichtung ist dabei derart mit einem mechanischen Energiespeicher verbunden, dass sie bei gelöster Arretierung gegen die Kraft des Energiespeichers nach unten verschiebbar ist bzw. mit Unterstützung der Kraft des Energiespeichers anhebbar ist. Bei dieser Konstruktion wird als Energiespeicher eine Feder angewendet, welche grundsätzlich sowohl mechanisch als auch pneumatisch sein kann.

Bei diesem höhenverstellbaren Stativ ist zwecks Energiereduzierung ein mechanischer Energiespeicher in Form einer in einer Seiltrommel angeordneten Torsionsfeder vorgesehen, welche über offenliegende Zugmittel mit der Haltevorrichtung verbunden ist. Durch Anbringen eines Getriebemotors beim Energiespeicher kann dieses System auch motorisch betrieben werden.

Durch die direkte Koppelung der Haltevorrichtung mit dem mechanischen Energiespeicher, d.h. ohne zusätzliche Hebelübersetzung, eignet sich diese Ausführung nur für relativ kleine Hebegewichte (max. 8 kg). Rotationsverdampfer haben aber sehr oft auch Glasaufbauten, die wesentlich schwerer sind. In diesen Fällen wird die Handhabung des Stativs unangenehm, da dabei die Gefahr des Abhebens oder Kippens des gesamten Gerätes besteht.

Durch den bei diesem höhenverstellbaren Stativ vorgesehenen motorischen Antrieb werden die offen zugänglichen Zugmittel über den mechanischen Kraftspeicher angetrieben. Er senkt sich mithin das Hebesystem nur aufgrund seines Eigengewichtes. Es wirkt m.a.W. beim Senken keine zwangsläufige Kraft auf die Einrichtung. Dies ist vor allem nachteilig bei starker Verschmutzung oder bei grossen zu verschiebenden Gewichten, welche auf die Einrichtung wirken. Es kommt dann zur Erscheinung des sog. "stick-slip"-Effektes, bei dessen Auftreten die Funktionssicherheit des Stativs nicht mehr gewährleistet ist. (EP-A 0149972)
Zum Stande der Technik gehört ferner eine Vorrichtung zum höhenveränderlichen Halten von Vakuumverdampfern oberhalb einer Aufstellplatte. Bei dieser Vorrichtung ist zur Schaffung von Massnahmen zur stabilen höhenveränderlichen und automatisierfähigen Halterung des Vakuumverdampfers dieser durch einen mit der Aufstellplatte mittel- oder unmittelbar verbundenen Schwenkhebel getragen. Dieser Hebel ist elektromechanisch oder pneumatisch bzw. hydraulisch zwischen zwei Endstellungen in beiden Schwenkrichtungen verschwenkbar und in den Schwenkstellungen fixierbar.

Es handelt sich bei dieser Vorrichtung nicht um eine Hebeeinrichtung mit einem Stativprofil und einer Grundkonsole. Diese Vorrichtung ist ausschliesslich für die Verstellung von Vakuumverdampfern, wie sie insbesondere bei Laborgeräten zur Anwendung gelangen, verwendbar, wobei, bedingt durch das gegebene Hebelsystem, nur eine lineare Bewegung in einer vorgegebenen Vertikalebene ausführbar ist. Für allgemeine Laborzwecke genügt eine derartige lineare Bewegung indessen nicht. Es bedarf dazu einer Bewegungsmöglichkeit in einer Ebene, eine Bewegung, welche diese bekannte Vorrichtung nicht erbringen kann. (EP-A 0156937)
Zum Stande der Technik wurde ferner ein Dreibeinstativ erwähnt, bei welchem mittels einer Spindel eine Hubvorrichtung höhenverschoben werden kann, um damit schwere Lasten, wie Automobile u. dgl. anzuheben. Ein derartiges Stativ ist für die vorliegenden Zwecke nicht verwendbar. (US-A 2 774 567)
Die vorliegende Erfindung bezweckt daher die Schaffung einer Hebeeinrichtung, insbesondere für Rotationsverdampfer sowie Hebebühnen für Labors, welche leicht, schnell und sicher, insbesondere mit grösserer Standsicherheit bei sonst gleichen Dimensionen, arbeitet und dies auch bei sehr unterschiedlichen Lasten.

Eine derartige Hebeeinrichtung ist gekennzeichnet durch einen der Ansprüche.

Die Erfindung wird anschliessend beispielsweise anhand einer Zeichnung erläutert.

Es zeigen:
- Fig. 1: die Seitenansicht eines Labor-Hebesystems mit Grundkonsole und Stativprofil, mit teilweise abgehobener Abdeckung,
- Fig. 2: eine Aufsicht auf das Stativ gemäss Fig. 1, mit abgehobener Abdeckung der Stativsäule und mit gestrichelter Darstellung der Teile der Hebeeinrichtung im Höhenbereich der Grundkonsole,
- Fig. 3: einen Schnitt gemäss Schnittlinie III - III der Fig. 2,
- Fig. 4: das Stativ gemäss Fig. 1 in um 90° gedrehter Lage,
- Fig. 5: die Aufsicht analog Fig. 2 mit zum Teil weggelassenen und zum Teil neuen Bestandteilen,
- Fig. 6: eine weitere Ausführung in der Darstellung analog Fig. 4,
- Fig. 7: eine Darstellung der Ausführung gemäss Fig. 6,
- Fig. 8: eine Aufsicht auf eine weitere Ausführung eines Stativs, in der Darstellung analog den Fig. 2 und 7, mit zusätzlichem Motorantrieb,
- Fig. 9: einen Schnitt durch die Einrichtung gemäss Schnittlinie XI - XI der Fig. 8,
- Fig. 10: einen Ausschnitt aus der Grundkonsole der Ausführung nach Fig. 8, gemäss Schnittlinie XII - XII,
- Fig. 11: einen Schnitt durch die Ausführung nach Fig. 1, gemäss Schittlinie XIII - XIII,
- Fig. 12: eine Rotationsverdampferanlage in perspektivischer Ansicht, von vorne, ohne Glasschutz, und
- Fig. 13: eine perspektivische Vorderansicht der Anlage nach Fig. 12, mit Glasschutz und erfindungsgemässer Hebeeinrichtung.

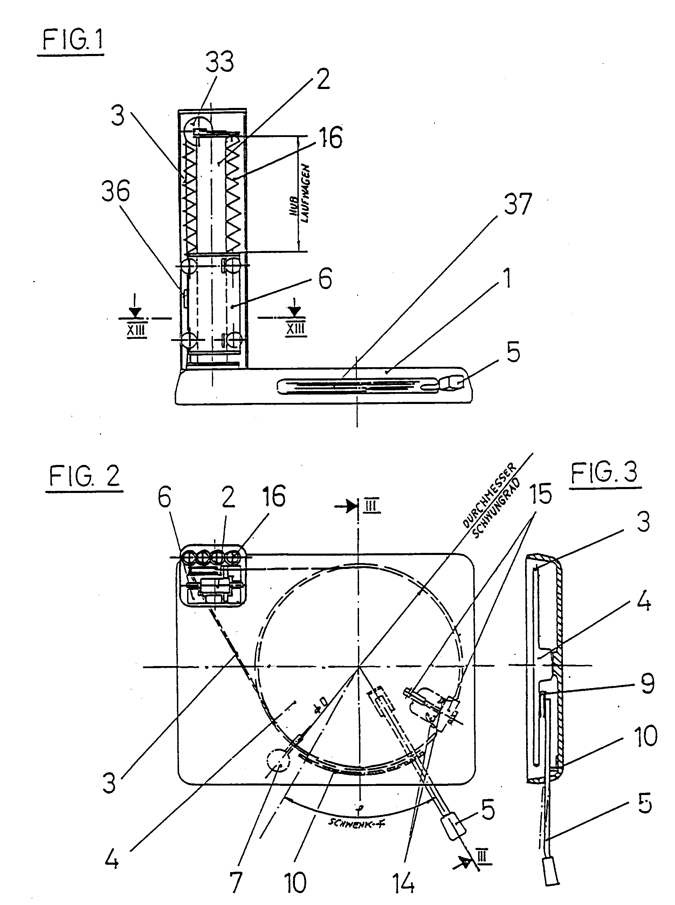

Das in den Fig. 1 bis 3 dargestellte Stativ weist eine Grundkonsole 1 mit darauf befestigtem Stativprofil 2 auf. Ueber eine Zugeinrichtung 3, welche hier ein Seil aufweist, ist ein am Stativprofil 2 auf Rollen geführter Laufwagen 6, auf- und abbewegbar. Der Laufwagen 6 ist mit einem Schwungrad 4, es kann auch eine andere als eine radförmige Masse grossen Trägheitsmomentes sein, z.B. eine kreissektorförmige, welche Masse mit einem Schwenkhebel 5 versehen ist, verbunden. Ueber den verlängerten Schwenkhebel 5, welcher hier am Schwungrad 4 befestigt ist und aus einem Schlitz 37 der Grundkonsole 1 herausragend mindestens annähernd in der Horizontalebene geschwenkt werden kann, wird das Schwungrad 4 mit einem Schwenkwinkel φ bewegt, welcher dem Hub des Laufwagens 6 entspricht. Der Laufwagen 6 ist mit einem nach aussen abgedeckten Zugsystem, das ein Seil 3 umfasst, mit dem Schwungrad 4 verbunden, welches seinerseits horizontal drehbar in der Grundkonsole 1 gelagert ist. Durch diese Anordnung kann idealerweise die ganze Grundfläche der Grundkonsole 1 dem Zugsystem nutzbar gemacht werden. Dadurch kann der Durchmesser des Schwungrades 4, welches dem Antrieb dient, sehr gross dimensioniert werden, wobei sich dann kleine auf das Schwungrad 4 wirkende Umfangskräfte ergeben. Ferner wirkt sich die grosse Schwungmasse dieses Schwungrades 4 günstig aus. Mit Hilfe eines in dieser Lage gespannten Federpaketes 16 wird das Zugsystem angefahren, zusätzlich beschleunigt und wieder abgebremst. Dabei wird die ganze Hebeanordnung über den ganzen Schwenkwinkelbereich φ des Hebels 5 äusserst leichtgängig und geschmeidig. Die grosse Masse des Schwungrades 4 bewirkt auch einen tief liegenden Schwerpunkt der ganzen Hebeeinrichtung und dadurch eine erhöhte Standsicherheit.

Besonders einfach kann mithin die Kraftübertragung vom Antriebsrad her auf den Laufwagen 6 erfolgen, wenn das Antriebsrad 4 über ein geschlossenes Zugmittelsystem als Seil 3, Kette oder Bandzug ausgebildet ist. Der äusserst grosse Umschlingungswinkel des Antriebsrades 4 und das Seilspannungssystem helfen mit, dass sich auch grosse Lasten am Hebesystem in jeder Richtung zwangsläufig und ohne Schlupf bewegen lassen.

Der Drehwinkel φ des Schwungrades 4 zum Hub des Laufwagens 6, welcher auch dem Drehwinkel des Schwenkhebels 5 entspricht und damit in seinem Maximalwert durch die Schlitzlänge in der Konsole 1 bestimmt ist, wird durch den grossen Durchmesser des Schwungrades 4 günstig beeinflusst. Beträgt der Radius des Schwungrades R, so muss nämlich der Winkel φ derart gewählt werden, dass R · φ∼ dem Hub des Laufwagens 6 entspricht. Durch einen verlängerten Hebel 5, welcher vom Schwungrad 4 über die Grundkonsole 1 aus dem Schlitz 37 vorsteht, wird die erforderliche Antriebskraft für das Bewegen des Laufwagens 6 im Sinne des Hebelgesetzes entsprechend reduziert.

Die Schwungmasse des Schwungrades 4 kann durch Anbringen eines zusätzlichen Massenkörpers 7, beispielsweise am Schwenkhebel 5, in der in Fig. 2 ersichtlichen Weise, vergrössert werden. Eine mit dem Schwungrad 4 verbundene U-förmige Blattfeder 9 ist mit ihrem freien Ende am Schwenkhebel 5 befestigt und versucht, diesen nach oben zu pressen. Der Hebel 5 greift mit einem auf ihm befestigten Zahnsegment in eine Verzahnung 10 ein, welche in der Grundkonsole 1 in der in Fig. 3 dargestellten Weise befestigt ist. In Ruhelage wird dadurch das Schwungrad 4 und mit ihm der Laufwagen 6 durch den Eingriff des Zahnsegmentes am Schwenkhebel 5 in die Verzahnung des Segmentes 10 an der Grundkonsole 1 blockiert. Das Anbringen des zusätzlichen Massenkörpers 7 in der Randzone des Schwungrades 4 oder am Schwenkhebel 5 selbst ermöglicht jeweils die Endposition mit dem Schwenkhebel 5 aufgrund des Schwungradeffektes schwungvoll bzw. äusserst leichtgängig zu erreichen. Damit wird durch Herunterpressen und Schwenken des Schwenkhebels 5, also ohne zusätzliche Bedienung einer Sperrklinke oder einer anderen mechanischen Sperre durch eine Handbedienung, der Laufwagen 6 in die gewünschte Lage gebracht. Durch Andrücken, Schwenken und Loslassen des Schwenkhebels 5 wird das System in besonders logischer Funktionsweise angefahren bzw. wieder arretiert.

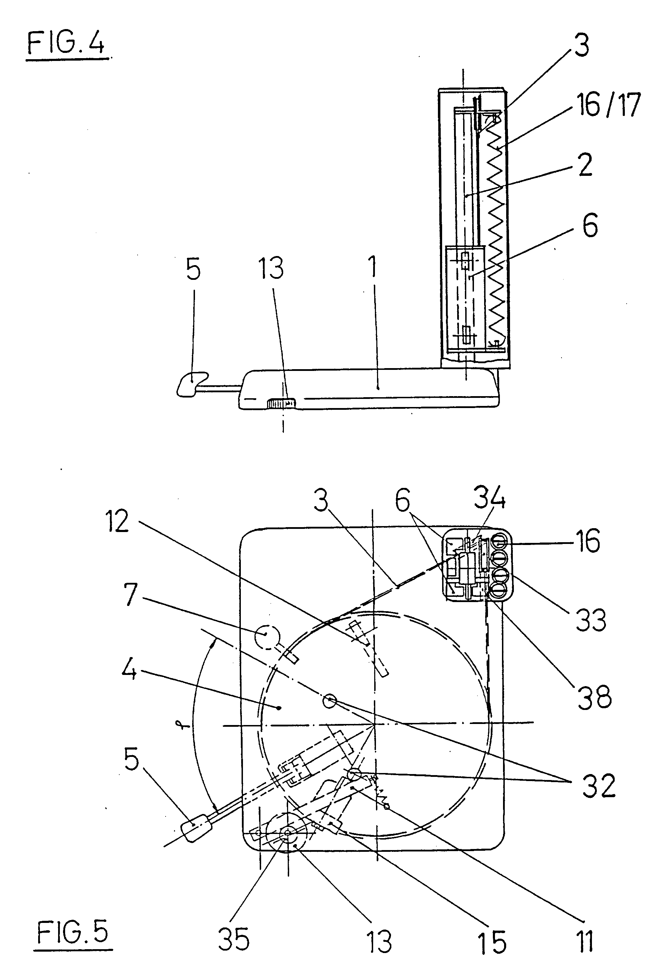

Wie in Fig. 5 ersichtlich, weist diese Ausführung einen als schwenkbaren Hebel ausgebildeten Endanschlag 11 auf sowie in der anderen Endlage einen festen Endanschlag 12. Dabei ist vorgesehen, mittels eines handbetätigbaren Stellrädchens 13 über einen zu dessen Drehachse exzentrischen Aufsatz 35 den Endanschlag 11, um seine im Bereich des Grundkonsolenrandes angeordnete Schwenkachse zu schwenken. Dabei zieht eine am freien Ende des Endanschlages 11 angedeutete Feder diesen an den Aufsatz 35.

Am Umfang des Schwenk- oder Schwungrades 4 befindet sich ein Halter 15 zum Befestigen der beiden angedeuteten Seilenden 14 des Seiles 3. Dieses Seil 3 verläuft in einer Rille des Schwungrades 4 und gelangt, diese verlassend, auf ein Umlenk-Rollensystem. Nach Ueberführung des Seiles 3 über die untere Rolle 34 und über die obere Umlenkrolle 33 wird anschliessend mittels entsprechender Klemmittel der Laufwagen 6 bei 36 am Seil 3 befestigt und dann dessen Ende über eine untere Umlenkrolle 38 wiederum in die Rille des Schwungrades 4 weitergeführt. Sein Ende 14 wird dem anderen Seilende 14 gegenüberliegend im Halter 15 befestigt, so dass ein in sich geschlossenes Hubsystem für den Laufwagen 6 entsteht. Das Schwungrad ist auf etwa 270° vom Seil 3 umschlungen.

Bei vielen Anwendungen muss die Hebeeinrichtung auf den Hub hin begrenzt werden können. Dies lässt sich hier auf einfache Weise dadurch lösen, dass der Drehwinkel φ des Schwungrades 4 durch Verstellen des Endanschlages 11 an der Grundkonsole 1 mittels Drehen des Stellrädchens 13 geändert wird.

Durch das Befestigen der beiden Seilenden 14 am Schwungrad 4 mittels des Halters 15 und einer entsprechenden Vorspannvorrichtung, wie dies zum Spannen von Drähten allgemein bekannt ist, erfolgt eine Vereinfachung der Konstruktion. Damit kann man auf herkömmliche Seilspannelemente, wie federbelastende Schwenkhebel mit Rollen, verzichten und ein völlig schlupffreies, zwangsläufiges Heben und Senken des Laufwagens 6 sicherstellen.

Mit dem Tragelement 6 ist zwecks einfacheren Anfahrens und Abbremsens ein Zugfederpaket 16 direktgekoppelt. Dadurch kann der Schwenkhebel 5 äusserst schwungvoll und leichtgängig bewegt werden. Beim Absenken des Laufwagens 6 hilft dessen Gewicht die Bedienungskraft des Hebels 5 unter gleichzeitigem Spannen des Federpaketes 16 zu reduzieren. Die Federenden sind am Laufwagen 6 bzw. am Stativ befestigt. Diese Federn sind leicht zugänglich und daher leicht austauschbar bzw. anpassbar.

Es ist natürlich auch möglich, durch entsprechende Ausführung anstelle eines Zugfederpaketes ein Druckfederpaket zu verwenden.

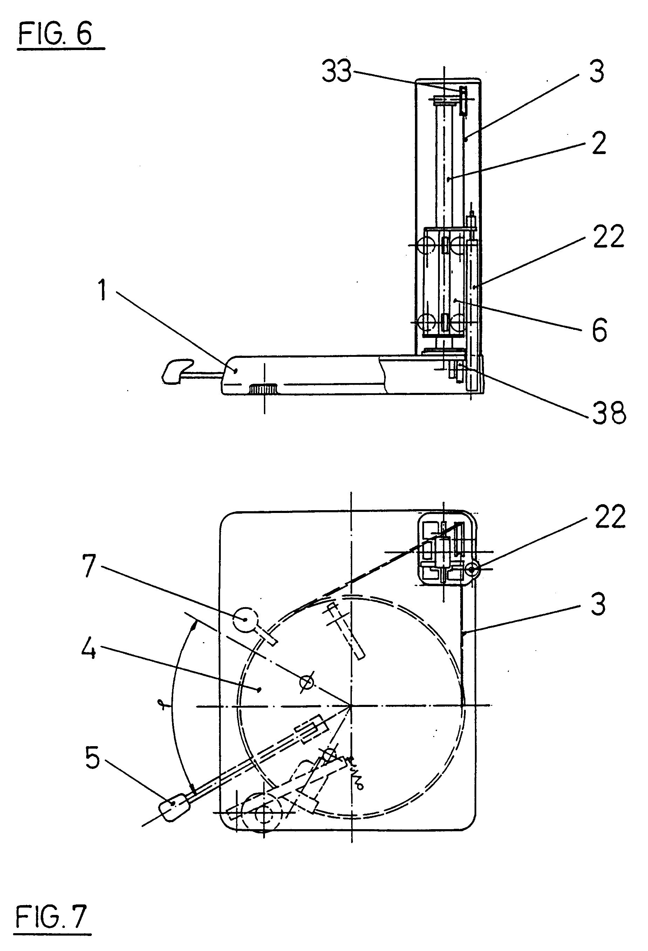

Eine andere Möglichkeit wäre, eine Gasfeder 22 anstelle von mechanischen Federn zu verwenden, welche vorteilhafterweise parallel zum Stativprofil angeordnet und am Tragelement fixiert wird. (Fig. 6 und 7).

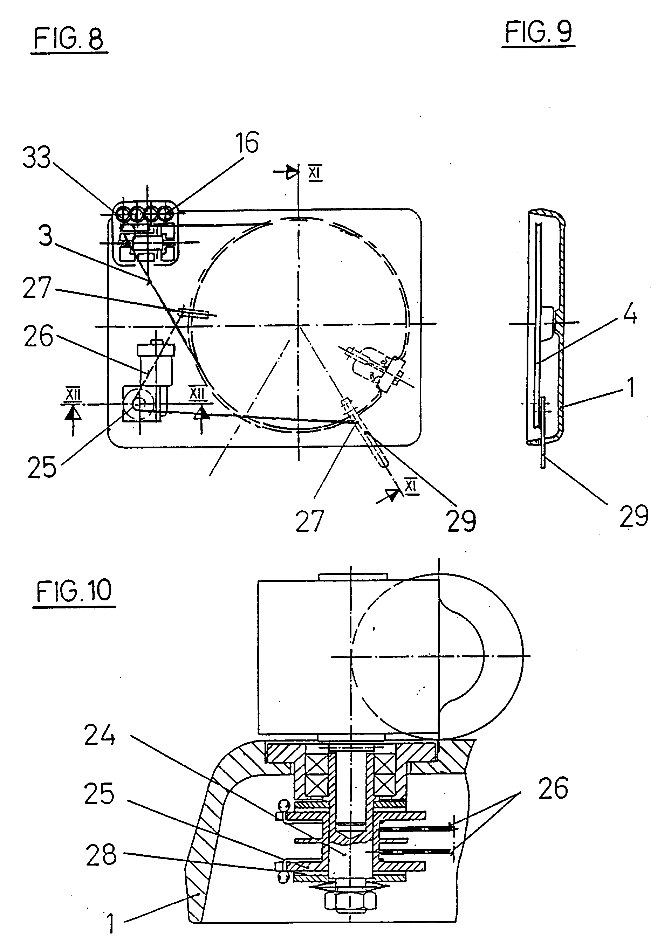

In den Fig. 8 bis 10 ist eine Ausführung ersichtlich, welche über einen zusätzlichen, motorgetriebenen Seilantrieb 26 verfügt. Das Seil ist je an zwei Stellen mit dem Schwungrad 4 verbunden. Die Seilenden 27 des Seilantriebes sind einerends am Schwenkhebel bzw. einem Notfallhebel 29 und andernends an dafür vorgesehenen Klemmen am Schwungrad 4 befestigt. Das Schwungrad 4 wird auf diese Weise mit Hilfe eines Getriebemotors angetrieben. Dabei ist das Schwungrad 4 über den ganzen Schwenkwinkel φ schwenkbar. Der Getriebemotor ist über eine Welle 24 mit einem Seilwindenrad 25 verbunden. Es kann in beiden Drehrichtungen bewegt werden. Bei doppelter Umschlingung des Seils erreicht man einen schlupffreien Antrieb. Dies wirkt sich besonders vorteilhaft durch die günstigen Hebelverhältnisse, d.h. den Durchmesser des kleinen Seilwindenrades 25 und den Durchmesser des sehr grossen Schwungrades 4, auf die aufzubringende Antriebskraft aus. Dies sichert einen hervorragenden Kraftübertragungsfaktor. Dadurch kann der kleine Antriebsmotor auf engstem Raum untergebracht werden und zwar auf derselben Grundfläche, wie das handbetriebene Gerät. Dies ist insbesondere wichtig bei Laborgeräten, bei denen der Grundflächenanspruch des Gerätes äusserst limitiert ist. Dadurch erreicht man eine sehr kompakte Bauweise, auch mit dem motorgetriebenen Gerät. Bezüglich Sicherheit ist die motorische Antriebseinheit über eine begrenzbare Drehmomentkupplung 28 mit dem Seilwindenrad 25 verbunden. Dadurch kann das System bei Stromausfall mit Hilfe eines Hilfshebels oder Notfallhebels 29, der anstelle des Schwenkhebels 5 mit dem Schwungrad 4 verbunden ist, von Hand in die Ruheposition, d.h. aus dem Gefahrenbereich herausgebracht werden.

Ueber einen fixen Positionsendschalter für die Ruhestellung am Endanschlag 12 und einem einstellbaren Positionsendschalter für die Arbeitsstellung am Endanschlag 11 kann das System über den ganzen erforderlichen Hubbereich gefahrlos vollautomatisch und über eine Steuerelektronik betrieben werden (nicht dargestellt). Durch einfaches Verstellen des einen Endanschlages 11 kann in der erwähnten Weise der Positionsendschalter sehr schnell in die gewünschte Arbeitslage gebracht werden, indem über das Stellrädchen 13 mit dem Exzenter 35, welches mit der Grundkonsole 1 drehbar verbunden ist, der Schwenkhebel 11, der über die Zugfeder an den Exzenter 35 angepresst wird, bewegt bzw. geschwenkt werden kann. Der jeweilige Endanschlag erfolgt durch zwei auf dem Schwungrad 4 angeordnete Nocken 32. (Fig. 5)
Durch die Wahl eines Viereckprofils als Stativprofil 2 werden somit am Laufwagen 6 alle an ihm entstehenden Drehmomente, durch Lasten hervorgerufen, in den vier Führungsflächen abgestützt, d.h., dass ohne Zusatzführung relativ grosse Drehmomente vom Führungsprofil 2 aufgefangen werden.

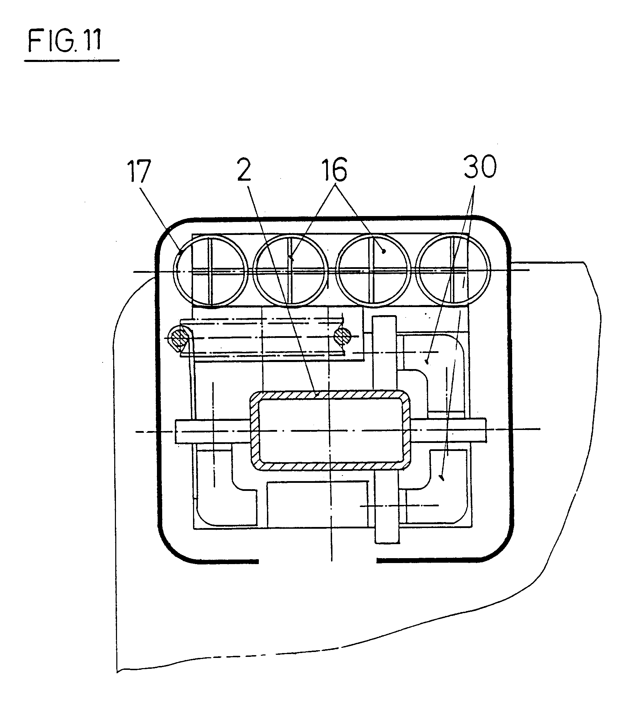

Durch die besondere Auslegung kann der Laufwagen 6 einfach und spielfrei bezüglich des Führungsprofiles 2 einjustiert werden, indem in jeder der beiden Achsen X und Y je ein Führungsprofil 30, beweglich und mit Stellschrauben versehen, gegen das Führungsprofil 2 verschoben werden kann. (Fig. 11)
In Fig. 11 sind die dargestellten Profile, entsprechend dem Stativprofil 2 für das Anpassen an den Laufwagen 6 ersichtlich.

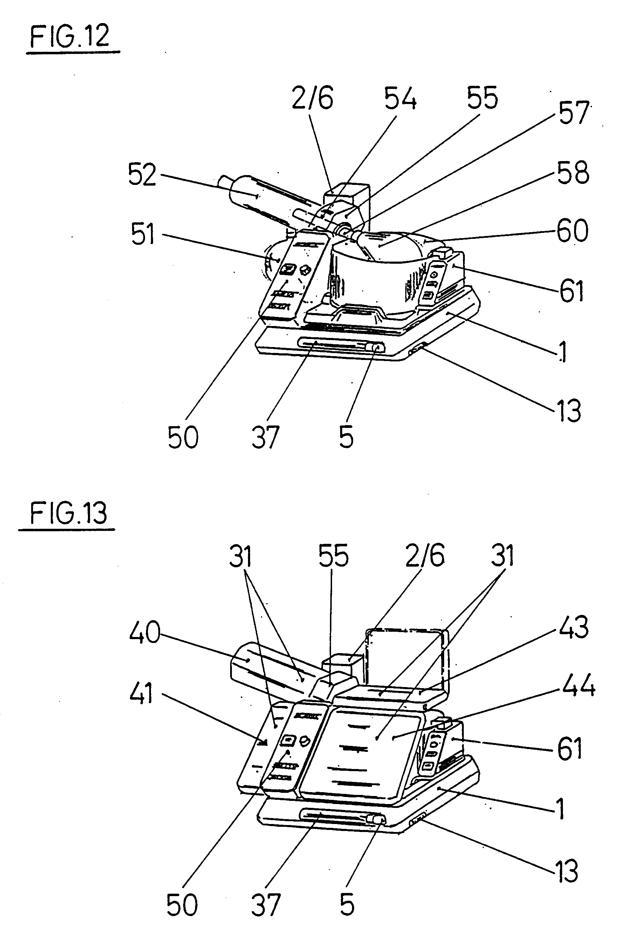

Fig. 12 zeigt in schematischer Darstellung eine Rotationsverdampferanlage mit ihren hauptsächlichsten Bestandteilen. Es ist eine Antriebselektronik 50 ersichtlich sowie ein Destillationskolben 51 und ein Destillationskühler 52. Ferner ist eine Vakuumdichtung 54 zum Dampfleitrohr 57 dargestellt und am Ende des rotierenden Dampfleitrohres 57 ein rotierender Verdampferkolben 58. Auf der Grundkonsole 1 steht ein Wasser- bzw. Oelbadbehälter 60 mit einem Heizeinsatz 61.

Fig. 13 zeigt die Anlage nach Fig. 12, jedoch versehen mit einem Glasschutz. Dieser umfasst einen Destillationskühlerschutz 40 sowie einen Destillationskolbenschutz 41. Ein weiterer Klappschutz 43 ist für den Verdampferkolben vorgesehen und ein Heizbadschutz 44 für den Wasser- bzw. den Oelbehälter. Alle diese, vorzugsweise aus transparentem Kunststoff, insbesondere aus Plexiglas bestehenden Schutzvorrichtungen sind einzeln beweglich, z.B. klappbar am Hubwagen bzw. an den am Hubwagen befestigten Teilen oder der Konsole vorgesehen.

Um ein sicheres Arbeiten zu ermöglichen, ist es zweckmässig, sog. Glasschutzelemente, wie diese in Fig. 13 ersichtlich sind, zu verwenden und diese entsprechend der Arbeitsweise der Anlage in die zweckmässige Lage zu bringen. In diesem Sinne erweist sich die Plazierung der Antriebsmechanik auch bezüglich Sicherheit beim Rotationsverdampfer in die Grundkonsole 1 als sehr vorteilhaft, indem die nötigen Schutzvorrichtungen, wie Plexiglasscheiben, Gitter u. dgl. für die Glasteile und Heizbäder kompakt, einfach und geschlossen oberhalb der Grundkonsole 1 plaziert und befestigt werden können.

Zur Funktion des Rotationsverdampfers:
Vorerst erfolgt die Einstellung der Parameter
. Siedetemperatur / Vakuum
. Drehzahl Kolben
für die zu destillierende Substanz.

Beim Erreichen aller eingestellten Parameterwerte wird der Verdampferkolben mittels des beschriebenen Schnellhebesystem in das Wasserbad eingefahren.

Dieser Vorgang (Ausfahren/Einfahren) muss je nach Schwierigkeitsgrad der Destillation (stark schäumende Substanzen zum Beispiel) oft wiederholt werden.

Aus diesem Grunde muss das Hebesystem schnell und sanft, sicher, leichtgängig auch bei stark unterschiedlicher Belastung arbeiten.

Ist die Destillation im Gange, wird
durch die Rotation des Verdampferkolbens in der Destillationslösung eine erzwungene Konvektion erzeugt. Die Wärmeübergänge
- Bad/Kolben
- Kolben/Destillationslösung
werden durch diesen Effekt wesentlich verbessert.

Nach Abschluss der Destillation wird der Verdampferkolben wieder aus dem Wasserbad gefahren.

Zum Wechseln bzw. Reinigen des Verdampferkolbens kann der Glasschutz beim Verdampferkolben aufgeklappt werden.

Der Glasschutz ist insgesamt derart ausgelegt, dass er beim Arbeiten kein Hindernis darstellt, aber im wesentlichen eine grosse Sicherheit für den Operateur darstellt.

Dadurch wird selbst mit den erwähnten Schutzvorrichtungen ein einwandfreies Arbeiten und Handling erreicht.

Für Laborhebebühnen wirkt sich dieselbe Konzeption ebenfalls äusserst positiv aus, indem dadurch die Arbeitsbühne in der ganzen Grundfläche nutzbar und zugänglich ist, d.h. ohne störende Einflüsse durch die Antriebsmechanik, Hebel, Griffe u. dgl. Die Bühne kann durch den Schwenkhebel 5 ausserhalb des Gefahrenbereiches bedient werden. Im weiteren wird der Schwerpunkt des Hebesystems durch die Orientierung der Mechanik in die Grundkonsole 1 ebenfalls sehr positiv beeinflusst, d.h. Abkippen oder Abheben des Gerätes wird dadurch gänzlich verunmöglicht. Die Bedienung des Schwenkhebels 5 ist in ergonomischer Hinsicht sehr zweckmässig. Da das Betätigen des Hebels 5 ausschliesslich im wesentlichen in der Horizontalebene auf der Höhe der Grundkonsole 1 stattfindet, spielt die Grösse der Bedienungsperson keine Rolle.

Zudem darf der Antriebsmechanismus 4, 5 des Hebesystems die Zugänglichkeit des entsprechenden Anwendungszweckes nicht beeinträchtigen, d.h. die Plazierung des Antriebssystems vom Hebestativ sowie Antriebshebel muss ausserhalb des Arbeitsbereiches plaziert sein. Damit kann auch eine optimale Sicherheit gewährleistet werden. Schliesslich soll das System auch für automatisierte Zwecke benutzt werden können. All diese Anforderungen werden mit dem erläuterten Hebesystem erfüllt.

## Patentansprüche

1. Hebeeinrichtung für Laborgeräte mit Stativprofil und Grundkonsole, mit einem anzuhebenden und abzusenkenden, längs eines Stativs bewegbaren Tragelement (6), welche Hebeeinrichtung mit Mitteln zum Festhalten und mit Betätigungsmitteln (5) zum Verschieben des Tragelementes (6) versehen ist, dadurch gekennzeichnet, dass die Betätigungsmittel einen im wesentlichen horizontal bewegbaren Betätigungshebel (5) sowie eine mit dem Tragelement (6) einerseits und dem Hebel (5) andererseits wirkverbundene Trägheitsmasse (4) umfassen.

2. Einrichtung nach Anspruch 1, dadurch gekennzeichnet, dass der Hebel (5) ein in der Grundkonsole (1) angeordneter, vorzugsweise in diesem blockierbarer Schwenkhebel ist.

3. Einrichtung nach einem der Ansprüche 1 oder 2, dadurch gekennzeichnet, dass die Trägheitsmasse (4) in der Grundkonsole (1) angeordnet ist und eine radförmig ausgebildete Schwungmasse (4) umfasst, wobei die Wirkverbindung mit dem Tragelement (6) vorzugsweise über ein seil-, band- oder kettenartiges Gebilde (3) erfolgt.

4. Einrichtung nach einem der Ansprüche 1 - 3, dadurch gekennzeichnet, dass das Tragelement als Laufwagen (6) ausgebildet ist, der dazu vorgesehen ist, längs eines Stativprofils (2) verschoben zu werden.

5. Einrichtung nach Anspruch 4, dadurch gekennzeichnet, dass eine das Gewicht des Tragelementes mindestens teilweise kompensierende, am Laufwagen einerseits und Stativ anderseits befestigte Kraftquelle, z.B. mindestens eine Feder, insbesondere eine Zug- oder eine Druckfeder, angeordnet ist.

6. Einrichtung nach einem der Ansprüche 3 - 5, dadurch gekennzeichnet, dass der Schwenkhebel (5) am Schwungrad (4) befestigt ist, z.B. über eine U-förmige Feder (9) oder über ein Gelenk mit Blattfeder (9), Druckfeder oder Torsionsfeder, wobei der mögliche Hebelschwenkung (φ · R) dem Gesamthub des Tragelementes (6) entspricht, das Ganze derart, dass der Hebel (5) beim Loslassen in eine Verzahnung eines an der Grundkonsole (1) angeordneten Verzahnungssegmentes (10) gepresst wird.

7. Einrichtung nach einem der Ansprüche 3 - 6, dadurch gekennzeichnet, dass in der Randzone des Schwungrades (4) oder am Schwenkhebel (5) ein zusätzlicher Massenkörper (7) befestigt ist.

8. Einrichtung nach einem der Ansprüche 4 - 7, dadurch gekennzeichnet, dass der Drehwinkel (φ) des Schwungrades (4) und damit der Hub des Laufwagens (6) durch einen fixen (12) und einen verstellbaren Endanschlag (11) an der Grundkonsole (1) festlegbar ist.

9. Einrichtung nach Anspruch 8, dadurch gekennzeichnet, dass der verstellbare Endanschlag (11) als Schwenkhebel ausgebildet und über ein Stellrad (13) mit Exzenter (35) änderbar ist.

10. Einrichtung nach einem der Ansprüche 3 - 9, dadurch gekennzeichnet, dass die beiden Enden (14) des Gebildes (3), z.B. formschlüssig, mit dem Schwungrad (4) verbunden sind.

11. Einrichtung nach einem der Ansprüche 3 - 10, dadurch gekennzeichnet, dass über die beiden Enden des Gebildes (3) mittels eines Befestigungsorgans (15), welches z.B. radial am Schwungrad (4) befestigt ist, die Spannung des Gebildes (3) einstellbar ist.

12. Einrichtung nach einem der Ansprüche 5 - 11, dadurch gekennzeichnet, dass das Federgebilde als Gasfederausführung (22) ausgebildet und parallel zum Stativprofil (2) angeordnet ist (Fig. 6, 7).

13. Einrichtung nach einem der Ansprüche 3 - 12, dadurch gekennzeichnet, dass das Schwungrad (4) über ein motorisch angetriebenes Seilelement (26) antreibbar ist.

14. Einrichtung nach einem der Ansprüche 3 - 13, dadurch gekennzeichnet, dass ein Seilwindenrad (25) mit dem Schwungrad (4) über ein geschlossenes Seilelement (26) verbunden ist.

15. Einrichtung nach einem der Ansprüche 3 - 13, dadurch gekennzeichnet, dass zwei Seilenden (27) radial mit dem Schwungrad (4) als Seilwippe über das Seilwindenrad (25) verbunden sind.

16. Einrichtung nach einem der Ansprüche 14 oder 15, dadurch gekennzeichnet, dass das Seilwindenrad (25) mit einer mechanischen Rutsch- oder Drehmomentkupplung (28) versehen ist.

17. Einrichtung nach einem der Ansprüche 3 - 16, dadurch gekennzeichnet, dass das Schwungrad (4) mit einem festen Radialschwenkhebel (29) versehen ist, zum Zwecke, das Schwungrad (4) bei Stromausfall oder Defekten an der Antriebsquelle in die Ruhelage schwenkbar zu halten.

18. Einrichtung nach einem der Ansprüche 4 - 17, dadurch gekennzeichnet, dass das Stativ (2) selbst durch ein Viereck-Führungsprofil den Laufwagen (6) gegen Drehmomente um die Achse des Stativs abstützt.

19. Einrichtung nach einem der Ansprüche 4 - 18, dadurch gekennzeichnet, dass der Laufwagen (6) durch einstellbare Profile (30) spielfrei an das Stativprofil (2) anpassbar ist (Fig. 11).

20. Einrichtung nach einem der Ansprüche 1-19 für einen Rotationsverdampfer mit Stativ, dadurch gekennzeichnet, dass bewegliche Schutzelemente, insbesondere Glasschutzelemente (40, 41, 43, 44) vorgesehen sind, um die hauptsächlichsten Teile (52, 51, 58, 60) der Anlage, wie des Rotationsverdampfers zum Schutze des Betreibers abzudecken (Fig. 13).

21. Einrichtung nach Anspruch 1, mit Rotationsverdampfer und Stativ, mit einem entlang eines Stativprofils (2) vertikal auf einer Grundkonsole (1) verschiebbaren Laufwagen (6) zum Befestigen einer Haltevorrichtung zur Aufnahme eines Antriebssystems für Rotationsverdampfer, insbesondere mit Glassystem sowie zum Befestigen von Stativmaterialien, Hebebühnen und Stativstangen, dadurch gekennzeichnet, dass der Laufwagen (6) über ein geschlossenes Bewegungssystem (3) mit einem Schwungrad (4) als Antrieb in der Grundkonsole (1) angeordnet ist, wobei das Schwungrad (4) einen radial über seinen Umfang herausragenden horizontal bewegbaren Hebel (5) aufweist, und das Rad 4, insbesondere horizontal angeordnet, am, in der Horizontalebene schwenkbaren sowie arretierbaren, Hebel ausserhalb der Grundkonsole (1), über den erforderlichen Hubweg des Laufwagens (6) bewegbar ist.

22. Einrichtung nach Anspruch 21, dadurch gekennzeichnet, dass der ganze Antrieb in der Grundkonsole (1) angeordnet ist.

## Claims

1. Hoist for laboratory equipment with upright stand and base support, having a movable carrying element (6) which may be raised and lowered along the length of a stand, said hoist being provided with devices to secure the carrying element (6) and operating means (5) to move it, characterised in that the control means comprise a operating lever (5), which is essentially movable in a horizontal plane, and an inertial weight (4) operatively connected to both the carrying element (6) and the lever (5).

2. Hoist according to Claim 1, characterised in that the lever (5) is a rocking lever disposed in the base support (1) and may preferably be locked therein.

3. Hoist according to one of Claims 1 or 2, characterised in that the inertial weight (4) is disposed in the base support (1) and comprises a balance weight (4) in the form of a wheel, wherein the operative connection with the carrying element (6) is preferably achieved by way of a cable-, belt- or chain-type structure (3).

4. Hoist according to one of Claims 1 - 3, characterised in that the carrying element is in the form of a cradle (6) provided to move along an upright stand (2).

5. Hoist according to Claim 4, characterised in that a power source, e.g. at least one spring, in particular a tension or pressure spring, is fastened to both the cradle and the stand to at least partly balance the weight of the carrying element.

6. Hoist according to one of Claims 3 - 5, characterised in that the rocking lever (5) is fastened to the balance wheel (4), e.g. via a U-shaped spring (9) or a joint with a leaf spring (9), pressure spring or torsion spring, wherein the possible swing of the lever (φ · R) corresponds to the total lift of the carrying element (6) such that on release the lever (5) is pressed into gearing or a toothed arrangement (10) positioned on the base support (1).

7. Hoist according to one of Claims 3 - 6, characterised in that an additional balance weight (7) is attached in the rim area of the balance wheel (4) or on the rocking lever (5).

8. Hoist according to one of Claims 4 - 7, characterised in that the angle of swing (φ) of the balance wheel (4), and with it the lift of the cradle (6), may be set by a fixed end stop (12) and an adjustable end stop (11) on the base support (1).

9. Hoist according to Claim 8, characterised in that the adjustable end stop (11) is in the form of a rocking lever and may be adjusted by means of an adjusting wheel (13) with a cam (35).

10. Hoist according to one of Claims 3 - 9, characterised in that the two ends (14) of structure (3) are connected, e.g. in form-locking manner, to the balance wheel (4).

11. Hoist according to one of Claims 3 - 10, characterised in that tensioning of structure (3) is adjustable via two ends of said structure (3) by means of a fastener (15) which is attached radially to the balance wheel (4), for example.

12. Hoist according to one of Claims 5 - 11, characterised in that the spring structure is in the form of a pneumatic spring arrangement (22) and is arranged parallel to the upright stand (2) (Figs. 6, 7).

13. Hoist according to one of Claims 3 - 12, characterised in that the balance wheel (4) may be actuated by a motor-driven cable element (26).

14. Hoist according to one of Claims 3 - 13, characterised in that a cable winch (25) is connected to the balance wheel (4) via a closed cable system (26).

15. Hoist according to one of Claims 3 - 13, characterised in that two cable ends (27) are connected radially to the balance wheel (4) via the cable winch (25) to form a cable rocker.

16. Hoist according to one of Claims 14 or 15, characterised in that the cable winch (25) is provided with a mechanical sliding or torque coupling (28).

17. Hoist according to one of Claims 3 - 16, characterised in that the balance wheel (4) is provided with a fixed radial rocking lever (29) so that the balance wheel (4) may still be swung into resting position in the case of a power failure or of faults in the drive mechanism.

18. Hoist according to one of Claims 4 - 17, characterised in that the stand (2) itself supports the cradle (6) against torques around the axis of the stand by means of a square guide.

19. Hoist according to one of Claims 4 - 18, characterised in that the cradle (6) may be adjusted to run free from float on the upright stand (2) by means of adjustable profile sections (30) (Fig. 11).

20. Hoist according to one of Claims 1 - 19 for a rotary evaporator, characterised in that movable protective elements, in particular glass protective elements (40, 41, 43, 44), are provided to cover the principal parts (52, 51, 58, 60) of the apparatus and of the rotary evaporator to protect the operator (Fig. 13).

21. Hoist according to Claim 1 with a rotary evaporator and stand, having a cradle (6) movable along an upright stand (2) vertical to a base support (1) to hold a holding device to accommodate a drive system for rotary evaporators, in particular with glass protection, and to hold stand attachments, lifting platforms and stand rods, characterised in that the cradle (6) is provided as a drive in the base support (1) in the form of a closed moving system (3) with a balance wheel (4), said wheel having a horizontally movable lever (5) projecting radially beyond its periphery, and said wheel (4), preferably horizontally disposed, may be moved along the required lifting path of the cradle (6) on the lever arranged outside the base support (1) which may be swung and locked into position horizontally.

22. Hoist according to Claim 21, characterised in that the entire drive system is disposed in the base support (1).

## Revendications

1. Dispositif de levage pour appareils de laboratoire, comportant un profilé de statif et une console de base, et pourvu d'un élément de support (6) qui est mobile le long d'un statif et doit être relevé et abaissé, lequel dispositif de levage est pourvu de moyens de blocage et de moyens d'actionnement (5) pour le déplacement de l'élément de support (6), caractérisé en ce que les moyens d'actionnement comprennent un levier d'actionnement (5) mobile sensiblement horizontalement, et une masse d'inertie (4) reliée de manière fonctionnelle à l'élément de support (6), d'une part, et au levier (5), d'autre part.

2. Dispositif selon la revendication 1, caractérisé en ce que le levier (5) consiste en un levier pivotant disposé dans la console de base (1) et de préférence apte à être bloqué dans celle-ci.

3. Dispositif selon l'une des revendications 1 ou 2, caractérisé en ce que la masse d'inertie (4) est disposée dans la console de base (1) et comprend une masse en rotation en forme de volant (4), étant précisé que la liaison fonctionnelle avec l'élément de support (6) se fait de préférence par l'intermédiaire d'une structure (3) en forme de câble, de bande ou de chaîne.

4. Dispositif selon l'une des revendications 1 à 3, caractérisé en ce que l'élément de support est conçu comme un chariot (6) qui est prévu pour être déplacé le long d'un profilé de statif (2).

5. Dispositif selon la revendication 4, caractérisé en ce qu'il est prévu une source d'énergie, par exemple au moins un ressort et notamment un ressort de traction ou de compression, qui compense au moins partiellement le poids de l'élément de support et est fixée d'un côté au chariot et de l'autre côté au statif.

6. Dispositif selon l'une des revendications 3 à 5, caractérisé en ce que le levier pivotant (5) est fixé au volant (4), par exemple par l'intermédiaire d'un ressort en U (9) ou d'une articulation à ressort à lame (9), à ressort à compression ou à torsion, étant précisé que le pivotement possible (φ . R) du levier correspond à la course totale de l'élément de support (6), de sorte que le levier (5), quand il est relâché, est poussé dans une denture d'un segment de denture (10) disposé au niveau de la console de base (1).

7. Dispositif selon l'une des revendications 3 à 6, caractérisé en ce qu'un corps de masse supplémentaire (7) est fixé dans la zone du bord du volant (4) ou au levier pivotant (5).

8. Dispositif selon l'une des revendications 4 à 7, caractérisé en ce que l'angle de rotation (φ) du volant (4) et, ainsi, la course du chariot (6), sont aptes à être déterminés par des butées de fin de course fixe (12) et réglable (11) prévues sur la console de base (1).

9. Dispositif selon la revendication 8, caractérisé en ce que la butée de fin de course réglable (11) est conçue comme un levier pivotant et est apte à être modifiée par l'intermédiaire d'une molette de réglage (13) comportant un excentrique (35).

10. Dispositif selon l'une des revendications 3 à 9, caractérisé en ce que les deux extrémités (14) de la structure (3) sont reliées au volant (4) par solidarité de forme, par exemple.

11. Dispositif selon l'une des revendications 3 à 10, caractérisé en ce que la tension de la structure (3) est réglable par l'intermédiaire de ses deux extrémités à l'aide d'un organe de fixation (15) qui est fixé par exemple radialement au volant (4).

12. Dispositif selon l'une des revendications 5 à 11, caractérisé en ce que la structure de ressort est conçue comme une construction de ressort à gaz (22) et est disposée parallèlement au profilé de statif (2) (fig. 6, 7).

13. Dispositif selon l'une des revendications 3 à 12, caractérisé en ce que le volant (4) est apte à être entraîné par l'intermédiaire d'un élément de câble (26) entraîné par moteur.

14. Dispositif selon l'une des revendications 3 à 13, caractérisé en ce qu'une poulie de treuil à câble (25) est reliée au volant (4) par l'intermédiaire d'un élément de câble fermé (26).

15. Dispositif selon l'une des revendications 3 à 13, caractérisé en ce que deux extrémités de câble (27) sont reliées radialement au volant (4), formant un dispositif oscillant à câble sur la poulie de treuil à câble (25).

16. Dispositif selon l'une des revendications 14 ou 15, caractérisé en ce que la poulie de treuil à câble (25) est pourvue d'un accouplement mécanique à glissement ou par couple (28).

17. Dispositif selon l'une des revendications 3 à 16, caractérisé en ce que le volant (4) est pourvu d'un levier pivotant radial fixe (29) destiné à immobiliser ledit volant en position de repos, par pivotement, en cas de panne de courant ou de défaillances au niveau de la source d'entraînement.

18. Dispositif selon l'une des revendications 4 à 17, caractérisé en ce que le statif (2) lui-même supporte, grâce à un profilé de guidage rectangulaire, le chariot (6) à l'encontre de couples de rotation autour de l'axe du statif.

19. Dispositif selon l'une des revendications 4 à 18, caractérisé en ce que le chariot (6) est apte à être adapté sans jeu au profilé de statif (2) grâce à des profilés réglables (30) (fig. 11).

20. Dispositif selon l'une des revendications 1 à 19 pour un évaporateur rotatif comportant un statif, caractérisé en ce que des éléments protecteurs mobiles, notamment des éléments protecteurs en verre (40, 41, 43, 44) sont prévus pour couvrir les éléments principaux (52, 51, 58, 60) de l'installation et de l'évaporateur rotatif, afin de protéger l'opérateur (fig. 13).

21. Dispositif selon la revendication 1, comportant un évaporateur rotatif et un statif, pourvu d'un chariot (6) qui est apte à être déplacé verticalement sur une console de base (1), le long d'un profilé de statif (2), et est destiné à la fixation d'un dispositif de retenue prévu pour recevoir un système d'entraînement pour l'évaporateur rotatif comportant notamment un système de verre, ainsi qu'à la fixation de matériaux de statif, de plates-formes de levage et de barres de statif, caractérisé en ce que le chariot (6) est disposé sur un système de mouvement fermé (3) comportant, comme mécanisme d'entraînement dans la console de base (1), un volant (4), étant précisé que celui-ci possède un levier (5) mobile horizontalement qui fait saillie radialement par rapport à la périphérie du volant (4), et ledit volant 4, disposé notamment à l'horizontale, est apte à être déplacé, au niveau du levier prévu à l'extérieur de la console de base (1), pivotant dans le plan horizontal et apte à être arrêté, suivant la course nécessaire du chariot (6).

22. Dispositif selon la revendication 21, caractérisé en ce que l'ensemble du mécanisme d'entraînement est disposé dans la console de base (1).
